# EUROPÄISCHE PATENTSCHRIFT

(11) **EP 3 791 709 B1**
(45) Veröffentlichungstag und Bekanntmachung des Hinweises auf die Patenterteilung: **28.06.2023**
(21) Anmeldenummer: 20182870.4
(22) Anmeldetag: 29.06.2020
(51) Int. Cl.: A01D 34/13

(54) **MESSERKLINGE FÜR EINE SCHNEIDVORRICHTUNG**
KNIFE BLADE FOR A CUTTING DEVICE
LAME DE COUTEAU POUR UN DISPOSITIF DE COUPE

(30) Priorität: 10.09.2019 DE 102019124197
(43) Veröffentlichungstag der Anmeldung: 17.03.2021
(73) Patentinhaber: CLAAS Selbstfahrende Erntemaschinen GmbH, 33428 Harsewinkel (DE)
(72) Erfinder: Herter, Felix, 33428 Harsewinkel (DE); Kiffmeier, Norbert, 33428 Harsewinkel (DE)
(74) Vertreter: CLAAS Gruppe

(56) Entgegenhaltungen:
- EP-A1- 3 578 027
- EP-B1- 1 038 427
- US-A- 4 942 728

## Beschreibung

Die vorliegende Erfindung betrifft eine Messerklinge für eine Schneidvorrichtung, mit zwei Schneidkanten, die an einem im Wesentlichen dreieckförmigen Schneidabschnitt angeordnet sind, der sich längs zu einem Befestigungsabschnitt erstreckt. Weiterhin hat die vorliegende Erfindung eine Schneidvorrichtung sowie ein Vorsatzgerät mit einer Schneidvorrichtung zum Gegenstand.

Eine als Mähdrescher ausgebildete Erntemaschine verfügt über ein Vorsatzgerät mit einer Schneidvorrichtung, die unter Ausführung eines scherenartigen Trennschnitts das Erntegut erntet. Hierzu ist eine Vielzahl von Messerklingen an einer oszillierend angetriebenen Messerleiste befestigt. Die Messerklingen arbeiten mit Mähfingern als Gegenschneide zusammen. Es sind auch Schneidvorrichtungen bekannt, bei denen die Gegenschneiden ebenfalls aus Messerklingen bestehen, die entweder starr an einem Messerbalken befestigt sind oder aber an einer weiteren Messerschiene angeordnet sind, die gegenläufig angetrieben wird. Mittels der Schneidvorrichtung werden verschiedene Arten von Erntegut geschnitten, beispielsweise Getreide wie Weizen, Hafer, Roggen, Gerste, Reis und Sojabohnen aber auch Gras, Raps, etc.

Aus der EP 1 038 427 B1 ist eine Messerklinge für eine Schneidvorrichtung der eingangs genannten Art bekannt. Die Messerklinge weist zwei Schneidkanten auf, die an einem im Wesentlichen dreieckförmigen Schneidabschnitt angeordnet sind, der sich längs zu einem Befestigungsabschnitt erstreckt. Die EP 3 578 027 A1 stellt Stand der Technik dar, der lediglich zur Beurteilung der Neuheit in Betracht zu ziehen ist. Die in diesem Dokument offenbarte Messerklinge weist ebenfalls zwei Schneidkanten auf, die an einem im Wesentlichen dreieckförmigen Schneidabschnitt angeordnet sind, der sich längs zu einem Befestigungsabschnitt erstreckt. Dabei weisen die Schneidkanten bereichsweise unterschiedliche Zahnteilungen auf, wobei in einem unteren Bereich, der sich ausgehend von dem Befestigungsabschnitt abschnittsweise in Richtung Messerklingenspitze erstreckt, die Anzahl der Zähne höher ist, als in einem oberen Bereich, der sich bis zur Messerklingenspitze erstreckt.

Für das Ernten kommen in Abhängigkeit von der Erntegutart Messerklingen mit unterschiedlichen Zahnteilungen, das heißt einer unterschiedlichen Zähneanzahl je Längeneinheit zum Einsatz. So kann bei Getreide im Allgemeinen eine Messerklinge mit grober Zahnteilung, d.h. geringer Zähneanzahl je Längeneinheit, zum Einsatz kommen, während bei schwierigen Erntebedingungen respektive Schneidbedingungen, die insbesondere durch die Erntegutart bedingt sind, wie beispielsweise bei Gras oder Reis, eine Messerklinge mit feiner Zahnteilung, d.h. hoher Zähneanzahl je Längeneinheit, zum Einsatz kommen sollte.

Eine Umrüstung des Vorsatzgerätes zur Anpassung an die jeweilige abzuerntende Erntegutart durch einen Wechsel der Messerklingen der Schneidvorrichtung ist mit einem großen manuellen und zeitlichen Aufwand verbunden.

Der Erfindung liegt die Aufgabe zugrunde, eine Messerklinge der eingangs beschriebenen Art bereitzustellen, welche ein breiteres Spektrum an zu schneidenden Erntegutarten abdecken kann.

Diese Aufgabe wird erfindungsgemäß durch eine Messerklinge mit den Merkmalen des Anspruches 1 gelöst. Vorteilhafte Weiterbildungen der Messerklinge sind Gegenstand der Unteransprüche.

Des Weiteren wird die Aufgabe durch eine Schneidvorrichtung gemäß dem Anspruch 8, ein Vorsatzgerät gemäß dem Anspruch 10 sowie eine Häckselvorrichtung einer selbstfahrenden Erntemaschine gemäß dem Anspruch 11 gelöst.

Gemäß dem Anspruch 1 wird eine Messerklinge für eine Schneidvorrichtung vorgeschlagen, mit zwei Schneidkanten, die an einem im Wesentlichen dreieckförmigen Schneidabschnitt angeordnet sind, der sich längs zu einem Befestigungsabschnitt erstreckt, wobei die Schneidkanten bereichsweise unterschiedliche Zahnteilungen aufweisen. Dabei weist ein Bereich zumindest zwei identisch geformte Zähne auf. Die Ausführung der Messerklinge mit Schneidkanten, die bereichsweise unterschiedliche Zahnteilungen aufweisen, bildet eine Art universal einsetzbare Messerklinge, deren Verwendung unabhängiger von der Erntegutart bzw. den daraus resultierenden Schneidbedingungen ist. Die jeweilige vorgesehene Zahnteilung der Bereiche orientiert sich dabei im Wesentlichen an der zu bearbeitenden Erntegutart bzw. den bestehenden Erntebedingungen und gegebenenfalls einer Vorfahrtgeschwindigkeit. Ein weiterer Vorteil besteht darin, dass die Standzeit bzw. Einsatzdauer der Messerklinge gegenüber einer Messerklinge mit einer einheitlichen Zahnteilung deutlich länger ist, da gerade der untere Bereich einem geringeren Verschleiß ausgesetzt ist.

Dabei können die Schneidkanten in zumindest zwei parallel verlaufende Bereiche mit unterschiedlichen Zahnteilungen unterteilt sein. Durch die Unterteilung in zumindest zwei Bereiche lässt sich ein Bereich ausbilden, der beispielsweise in einem Getreidebestand hohe Vorfahrtgeschwindigkeiten einer Erntemaschine, an der das Vorsatzgerät angeordnet ist, ermöglicht. Zumindest ein weiterer Bereich ermöglicht mit derselben Messerklinge das Ernten von beispielsweise Gras oder Reis unter schwierigen Erntebedingungen mit einer niedrigeren Vorfahrtgeschwindigkeit.

Erfindungsgemäß ist in einem unteren Bereich, der sich ausgehend von dem Befestigungsabschnitt abschnittsweise in Richtung Messerklingenspitze erstreckt, die Anzahl der Zähne geringer als in einem oberen Bereich, der sich bis zur Messerklingenspitze erstreckt. Bei einer Ausführung mit zwei Bereichen schließt sich der obere Bereich an den unteren Bereich an. Denkbar ist aber auch, wenigstens einen mittleren Bereich mit einer Zahnteilung vorzusehen, welche zwischen der Zahnteilung des oberen Bereiches und der Zahnteilung des unteren Bereichs liegt. Der untere Bereich der Messerklinge kommt für das Schneiden von Getreide oder dergleichen bei hohen Vorfahrtgeschwindigkeiten zum Tragen, während der obere Bereich für das Schneiden unter schwierigen Erntebedingungen mit einer niedrigen Vorfahrtgeschwindigkeit zum Tragen kommt. So erfordert die Ernte von faserigem Erntegut wie Gras oder dergleichen eine niedrige Vorfahrtgeschwindigkeit, so dass im Wesentlichen nur der obere Bereich der Messerklinge auf das Erntegut einwirkt.

Insbesondere kann die Zahnteilung im oberen Bereich einem ganzzahligen Vielfachen der Zahnteilung im unteren Bereich entsprechen.

Weiterhin kann sich der untere Bereich in Längsrichtung der Messerklinge zumindest zur Hälfte über die Längsausdehnung des Schneidabschnittes der Messerklinge erstrecken. Besonders bevorzugt kann sich der untere Bereich über 60% bis 80 % der Längsausdehnung des Schneidabschnittes erstrecken, während der obere Bereich sich bevorzugt über 40% bis 20% der Längsausdehnung des Schneidabschnittes erstreckt. Die vergleichsweise geringe Längsausdehnung des oberen Bereiches ist gerade bei langsamen Vorfahrtgeschwindigkeiten, z.B. unter 5 km/h ausreichend, damit das Erntegut im Wesentlichen im oberen Bereich der Messerklinge geschnitten wird.

Bevorzugt kann der obere Bereich eine Zahnteilung aufweisen, die einer Anzahl zwischen 13 und 15 Zähnen pro Zoll entspricht.

Weiter bevorzugt kann der untere Bereich eine Zahnteilung aufweisen, die einer Anzahl zwischen 6 und 8 Zähnen pro Zoll entspricht. So kann durch die gröbere Zahnteilung beim Ernten von Getreide eine höhere Vorfahrtgeschwindigkeit erzielt werden.

Insbesondere kann die die Messerklinge einteilig ausgeführt sein und mit einer zweiten Messerklinge eine Doppelklinge bilden.

Die erfindungsgemäße Messerklinge kann auch an einer rotierenden Häckselvorrichtung einer selbstfahrenden Erntemaschine wie einem Mähdrescher oder einem Feldhäcksler zum Einsatz kommen.

Darüber hinaus kann die erfindungsgemäße Messerklinge an allen landwirtschaftlichen Arbeitsgeräten oder landwirtschaftlichen Arbeitsmaschinen zur Anwendung kommen, die eine Vorrichtung zum Schneiden und/oder Zerkleinern von Erntegut aufweisen.

Weiterhin wird die eingangs gestellte Aufgabe durch eine Schneidvorrichtung mit mindestens einer oszillierend antreibbaren Messerleiste gemäß dem Anspruch 8 gelöst, an der mehrere erfindungsgemäß ausgeführte Messerklingen angeordnet sind. Die Schneidvorrichtung kann auch zwei Messerleisten aufweisen, die oszillierend angetrieben sind, wobei die beiden Messerleisten phasenverschoben angetrieben sind. Die Schneidvorrichtung kann als ein Messerbalken eines Schneidwerks und/oder als seitliche Trennmesser, sogenannte Rapsmesser ausgeführt sein.

Insbesondere kann die Schneidvorrichtung als Doppelmesser-Schneidvorrichtung ausgeführt sein. Hierfür können zwei Messerleisten vorgesehen sein, an denen jeweils die erfindungsgemäßen Messerklingen angeordnet sind.

Des Weiteren wird die Aufgabe durch ein Vorsatzgerät mit einer Schneidvorrichtung nach einem der Ansprüche 8 oder gelöst. Die Schneidvorrichtung kann als horizontal verlaufender Messerbalken des Vorsatzgerätes oder als vertikal an dem Vorsatzgerät angeordnete Trennmesser, sogenannte Rapsmesser, ausgeführt sein.

Weiterhin wird die Aufgabe durch eine Häckselvorrichtung einer selbstfahrenden Erntemaschine mit Messerklingen, die nach einem der Ansprüche 1 bis 7 ausgebildet sind, gelöst. Die um eine Achse rotierend angetriebene Häckselvorrichtung umfasst über ihren Umfang verteilt angeordnete Messerklingen, welche im Zusammenwirken mit Gegenmessern dem Schneiden bzw. Häckseln von Erntegut dienen.

Die vorliegende Erfindung wird nachstehend anhand eines in den Zeichnungen dargestellten Ausführungsbeispieles näher erläutert.

### Es zeigen:

- Fig. 1: eine schematische Draufsicht auf ein Vorsatzgerät; und
- Fig. 2: eine schematische Ansicht einer am Messerbalken des Vorsatzgerätes angeordneten Messerklinge.

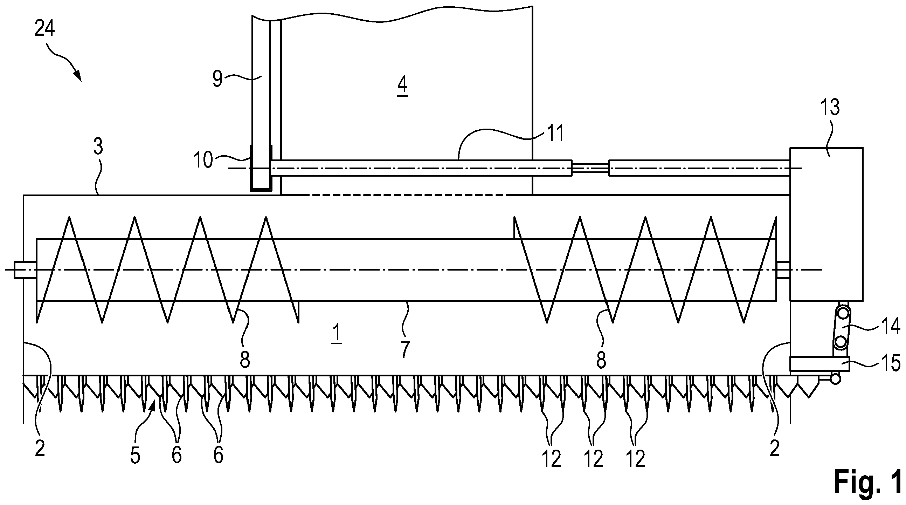

Die Darstellung in Fig. 1 zeigt eine schematische Draufsicht auf ein Vorsatzgerät 24 zur Verwendung an einer - nicht näher dargestellten - selbstfahrenden Erntemaschine, insbesondere einem Mähdrescher. Ein Trägerrahmen des Vorsatzgerätes 24 umfasst eine im Wesentlichen horizontale Bodenplatte 1, vertikale Seitenwangen 2 an einem linken und rechten Rand der Bodenplatte 1 sowie eine Rückwand 3, die die Hinterkanten der Bodenplatte 1 und der Seitenwangen 2 verbindet. Die Bodenplatte 1 kann mehrteilig ausgeführt sein, sodass ein vorderer Teil der Bodenplatte 1 gegenüber einem hinteren Teil der Bodenplatte 1 in horizontaler Richtung relativbeweglich ist. Die Rückwand 3 weist eine mittige Öffnung auf, an der ein Schrägförderer 4 der Erntemaschine anschließt. An der Vorderkante der Bodenplatte 1 ist eine als Messerbalken ausgeführte Schneidvorrichtung 5 angeordnet. Die Schneidvorrichtung 5 weist mindestens eine oszillierend angetriebene, horizontal verschiebbare Messerleiste auf. An der Messerleiste sind mehrere in Draufsicht im Wesentlichen dreieckige Messerklingen 6 angeordnet. Am vorderen Rand der Bodenplatte 1 ortsfest montierte, nach vorn vorspringende Finger 12 haben nach hinten offene Schlitze, in die die Messerklingen 6 in Querrichtung bewegbar eingreifen. Indem schräge Schneidkanten der Zähne 6 über seitliche Kanten der Finger 12 herstreichen, wird in ihre Reichweite gelangendes Erntegut geschnitten und fällt auf die Bodenplatte 1. Eine zwischen den Seitenwangen 2 drehbar montierte Einzugwalze 7 ist mit gegenläufigen Schnecken 8 besetzt, die das abgeschnittene Erntegut von den Seiten der Bodenplatte 1 zur Mitte schieben und dem Schrägförderer 4 zuführen.

Ein beispielhaft dargestellter gemeinsamer Antriebsstrang der Schneidvorrichtung 5 und der Einzugwalze 7 umfasst hier einen von einem Motor der Erntemaschine angetriebenen Riemen 9 und eine Welle 11, die eine von dem Riemen 9 umschlungene Riemenscheibe 10 trägt und sich im Wesentlichen parallel zur Rückwand 3 bis in eine Getriebebaugruppe 13 an der rechten Seitenwange 2 erstreckt. Die Getriebebaugruppe 13 treibt einerseits die Einzugwalze 7 und andererseits über eine Gelenkwelle 14 und einen Exzenter 15 die zumindest eine Messerleiste an. Alternative Antriebsformen zumindest der Schneidvorrichtung 5 sind denkbar, beispielsweise durch einen elektromechanischen Linearantrieb.

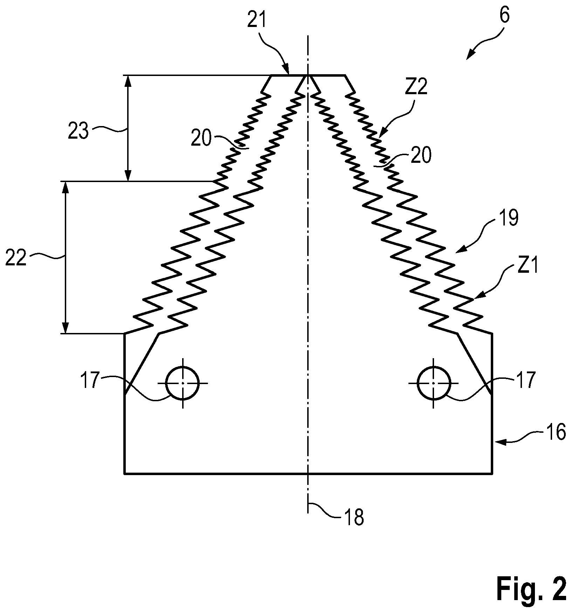

Fig. 2 zeigt eine schematische Ansicht einer einzelnen an der Schneidvorrichtung 5 des Vorsatzgerätes 24 lösbar angeordneten Messerklinge 6. Die Messerklinge 6 weist einen Befestigungsabschnitt 16 auf, der mit Durchbohrungen 17 versehen ist. Durch die Durchbohrungen 17 sind Befestigungsmittel, beispielsweise Nieten oder Schrauben, hindurchführbar. Mit 18 ist eine Längsachse der Messerklinge 6 bezeichnet, die zugleich auch Symmetrieachse ist. Längs zu dem Befestigungsabschnitt 16 erstreckt sich ein im Wesentlichen dreieckförmigen Schneidabschnitt 19. An dem Schneidabschnitt 19 sind einander gegenüberliegend zwei Schneidkanten 20 angeordnet. Die Schneidkanten 20 verlaufen vom Befestigungsabschnitt 16 in Längsrichtung der Messerklinge 6 bis zur Messerklingenspitze 21. Die Schneidkanten 20 sind spiegelsymmetrisch zur Längsachse 18 ausgeführt.

Die Schneidkanten 20 sind jeweils in zumindest zwei parallel verlaufende, d.h. einander gegenüberliegende, Bereiche 22, 23 mit unterschiedlichen Zahnteilungen Z1, Z2 unterteilt. Dabei weist jeder Bereich 22, 23 mindestens zwei identisch ausgebildete Zähne auf.

Die Zahnteilung Z1, Z2 gibt die Anzahl der Zähne eines Bereichs 22, 23 der Schneidkanten 20 je Längeneinheit wieder. In einem unteren Bereich 22, der sich ausgehend von dem Befestigungsabschnitt 16 abschnittsweise in Richtung der Messerklingenspitze 21 erstreckt, ist die Anzahl der Zähne geringer, als in einem oberen Bereich 23, der sich bis zur Messerklingenspitze 21 erstreckt. Im unteren Bereich 22 beispielsweise beträgt die Anzahl der Zähne zwischen 6 und 8 Zähnen pro Zoll. Im oberen Bereich 23 beispielsweise beträgt die Anzahl der Zähne zwischen 13 und 15 Zähnen pro Zoll. Besonders bevorzugt kann im unteren Bereich 22 die Anzahl der Zähne 7 und im oberen Bereich 23 die Anzahl der Zähne 14 Zähnen pro Zoll entsprechen. Die Zahnteilung Z2 im oberen Bereich 23 entspricht somit einem ganzzahligen Vielfachen der Zahnteilung Z1 im unteren Bereich 22.

Weiterhin kann zumindest ein mittlerer Bereich vorgesehen sein, dessen Zähneanzahl beispielsweise zwischen 9 und 11 Zähnen pro Zoll liegt. Dadurch kann ein Übergangsbereich zwischen dem unteren Bereich 2 und dem oberen Bereich 23 gebildet werden, der bei mittleren Vorfahrtgeschwindigkeiten der das Vorsatzgerät 24 tragenden Erntemaschine beim Schneiden von Erntegut wirksam ist.

Bevorzugt kann sich der untere Bereich 22 in Längsrichtung der Messerklinge 6 zumindest zur Hälfte über die Längsausdehnung des Schneidabschnittes 19 der Messerklinge 6 erstrecken. Weiter bevorzugt erstreckt sich der untere Bereich 22 über 60% bis 80 % der Längsausdehnung des Schneidabschnittes 19, während der obere Bereich 23 sich bevorzugt über 40% bis 20% der Längsausdehnung des Schneidabschnittes 19 erstreckt.

Die Verwendung der erfindungsgemäßen Messerklinge 6 ist nicht auf eine Schneidvorrichtung 5 eines Vorsatzgerätes 24 beschränkt. Darüber hinaus ist eine Verwendung an einer Häckselvorrichtung des Mähdreschers oder eines Feldhäckslers denkbar. Ebenso können die erfindungsgemäßen Messerklingen 6 an einem an dem Vorsatzgerät 24 seitlich montierbaren Trennmesser, einem so genannten Rapsmesser, zur Anwendung kommen.

Grundsätzlich kann die erfindungsgemäße Messerklinge an allen landwirtschaftlichen Arbeitsgeräten oder landwirtschaftlichen Arbeitsmaschinen zur Anwendung kommen, die eine Vorrichtung zum Schneiden und/oder Zerkleinern von Erntegut aufweisen.

### Bezugszeichenliste

- 1: Bodenplatte
- 2: Seitenwange
- 3: Rückwand
- 4: Schrägförderer
- 5: Schneidvorrichtung
- 6: Messerklinge
- 7: Einzugwalze
- 8: Schnecke
- 9: Riemen
- 10: Riemenscheibe
- 11: Welle
- 12: Finger
- 13: Getriebebaugruppe
- 14: Gelenkwelle
- 15: Exzenter
- 16: Befestigungsabschnitt
- 17: Durchbohrung
- 18: Längsachse von 6
- 19: Schneidabschnitt
- 20: Schneidkante
- 21: Messerklingenspitze
- 22: Unterer Bereich
- 23: Oberer Bereich
- 24: Vorsatzgerät

- Z1: Zahnteilung
- Z2: Zahnteilung

## Patentansprüche

1. Messerklinge (6) für eine Schneidvorrichtung (5), mit zwei Schneidkanten (20), die an einem im Wesentlichen dreieckförmigen Schneidabschnitt (19) angeordnet sind, der sich längs zu einem Befestigungsabschnitt (16) erstreckt, **dadurch gekennzeichnet, dass** die Schneidkanten (19) bereichsweise unterschiedliche Zahnteilungen (Z1, Z2) aufweisen, wobei in einem unteren Bereich (22), der sich ausgehend von dem Befestigungsabschnitt (16) abschnittsweise in Richtung Messerklingenspitze (21) erstreckt, die Anzahl der Zähne geringer ist, als in einem oberen Bereich (23), der sich bis zur Messerklingenspitze (21) erstreckt.

2. Messerklinge (6) nach Anspruch 1, **dadurch gekennzeichnet, dass** die Schneidkanten (19) in zumindest zwei parallel verlaufende Bereiche (22, 23) mit unterschiedlichen Zahnteilungen (Z1, Z2) unterteilt sind.

3. Messerklinge (6) nach Anspruch 1 oder 2, **dadurch gekennzeichnet, dass** die Zahnteilung (Z2) im oberen Bereich (23) einem ganzzahligen Vielfachen der Zahnteilung (Z1) im unteren Bereich (22) entspricht.

4. Messerklinge (6) nach einem der Ansprüche 1 bis 3, **dadurch gekennzeichnet, dass** sich der untere Bereich (22) in Längsrichtung der Messerklinge (6) zumindest zur Hälfte über die Längsausdehnung des Schneidabschnittes (19) der Messerklinge (5) erstreckt.

5. Messerklinge (6) nach einem der Ansprüche 1 bis 4, **dadurch gekennzeichnet, dass** der obere Bereich (23) eine Zahnteilung (Z2) aufweist, die einer Anzahl zwischen 13 und 15 Zähnen pro Zoll entspricht.

6. Messerklinge (6) nach einem der Ansprüche 1 bis 5, **dadurch gekennzeichnet, dass** der untere Bereich (22) eine Zahnteilung (Z1) aufweist, die einer Anzahl zwischen 6 und 8 Zähnen pro Zoll entspricht.

7. Messerklinge (6) nach einem der vorangehenden Ansprüche, **dadurch gekennzeichnet, dass** die Messerklinge (6) einteilig ausgeführt ist und mit einer zweiten Messerklinge (6) eine Doppelklinge bildet.

8. Schneidvorrichtung (5) mit mindestens einer oszillierend antreibbaren Messerleiste, an der mehrere Messerklingen (6) angeordnet sind, die nach einem der Ansprüche 1 bis 7 ausgebildet sind.

9. Schneidvorrichtung (5) nach Anspruch 8, dass die Schneidvorrichtung (5) als Doppelmesser-Schneidvorrichtung ausgeführt ist.

10. Vorsatzgerät (24) mit einer Schneidvorrichtung (5) nach Anspruch 8 oder 9.

11. Häckselvorrichtung einer selbstfahrenden Erntemaschine mit Messerklingen, die nach einem der Ansprüche 1 bis 7 ausgebildet sind.

## Claims

1. A knife blade (6) for a cutting device (5), with two cutting edges (20) which are disposed on a substantially triangular cutting section (19), which extends along a fastening section (16), **characterized in that** the cutting edges (19) have regions with different tooth pitches (Z1, Z2), wherein in a lower region (22), which in sections extends from the fastening section (16) in the direction of the knife blade tip (21), the number of teeth is smaller than in an upper region (23) which extends to the knife blade tip (21).

2. The knife blade (6) according to claim 1, **characterized in that** the cutting edges (19) are divided into at least two parallel regions (22, 23) with different tooth pitches (Z1, Z2).

3. The knife blade (6) according to claim 1 or claim 2,
**characterized in that** in the upper region (23), the tooth pitch (Z2) corresponds to a whole number multiple of the tooth pitch (Z1) in the lower region (22).

4. The knife blade (6) according to one of claims 1 to 3,
**characterized in that** the lower region (22) extends in the longitudinal direction of the knife blade (6) over at least half of the longitudinal extent of the cutting section (19) of the knife blade (5).

5. The knife blade (6) according to one of claims 1 to 4,
**characterized in that** the upper region (23) has a tooth pitch (Z2) which corresponds to a number of between 13 and 15 teeth per inch.

6. The knife blade (6) according to one of claims 1 to 5,
**characterized in that** the lower region (22) has a tooth pitch (Z1) which corresponds to a number of between 6 and 8 teeth per inch.

7. The knife blade (6) according to one of the preceding claims, **characterized in that** the knife blade (6) is formed in one piece and forms a twin blade with a second knife blade (6).

8. A cutting device (5) with at least one knife bar which can be driven in oscillation, on which a plurality of knife blades (6) are disposed, which are configured in accordance with one of claims 1 to 7.

9. The cutting device (5) according to claim 8, in which the cutting device (5) is configured as a double knife cutting device.

10. A front attachment (24) with a cutting device (5) according to claim 8 or claim 9.

11. A chopping device for a self-propelled harvesting machine with knife blades which are configured in accordance with one of claims 1 to 7.

## Revendications

1. Section de lame (6) pour un dispositif de coupe (5), comprenant deux arêtes de coupe (20) qui sont disposées sur une portion de coupe sensiblement triangulaire (19) qui s'étend longitudinalement par rapport à une portion de fixation (16), **caractérisée en ce que** les arêtes de coupe (19) comportent par zones des pas de denture différents (Z1, Z2), dans une zone inférieure (22) qui s'étend à partir de la portion de fixation (16) par portions en direction de la pointe de section de lame (21), le nombre de dents étant inférieur à celui de la zone supérieure (23) qui s'étend jusqu'à la pointe de section de lame (21).

2. Section de lame (6) selon la revendication 1, **caractérisée en ce que** les arêtes de coupe (19) sont divisées en au moins deux zones s'étendant parallèlement (22, 23) avec des pas de denture différents (Z1, Z2).

3. Section de lame (6) selon la revendication 1 ou 2, **caractérisée en ce que** le pas de denture (Z2) dans la zone supérieure (23) correspond à un multiple entier du pas de denture (Z1) dans la zone inférieure (22).

4. Section de lame (6) selon une des revendications 1 à 3, **caractérisée en ce que** la zone inférieure (22) s'étend dans la direction longitudinale de la section de lame (6) au moins jusqu'à la moitié sur l'extension longitudinale de la portion de coupe (19) de la section de lame (5).

5. Section de lame (6) selon une des revendications 1 à 4, **caractérisée en ce que** la zone supérieure (23) présente un pas de denture (Z2) qui correspond à un nombre entre 13 et 15 dents par pouce.

6. Section de lame (6) selon une des revendications 1 à 5, **caractérisée en ce que** la zone inférieure (22) présente un pas de denture (Z1) qui correspond à un nombre entre 6 et 8 dents par pouce.

7. Section de lame (6) selon une des revendications précédentes, **caractérisée en ce que** la section de lame (6) est conformée d'une seule pièce et forme, avec une seconde section de lame (6), une section double.

8. Dispositif de coupe (5) comprenant au moins un lamier entraînable de manière oscillante sur lequel sont disposées plusieurs sections de lame (6) qui sont conçues selon une des revendications 1 à 7.

9. Dispositif de coupe (5) selon la revendication 8, **caractérisé en ce que** le dispositif de coupe (5) est conformé en dispositif de coupe à lame double.

10. Outil frontal (24) comprenant un dispositif de coupe (5) selon la revendication 8 ou 9.

11. Dispositif de hachage d'une machine de récolte automotrice comprenant des sections de lame qui sont conçues selon une des revendications 1 à 7.
